# EUROPÄISCHE PATENTANMELDUNG

(11) **EP 1 714 945 A1**
(43) Veröffentlichungstag der Anmeldung: **25.10.2006**
(21) Anmeldenummer: 05008376.5
(22) Anmeldetag: 18.04.2005
(51) Int. Cl.: C02F 1/72

(54) **Verfahren zur Aufbereitung von wässrigen Rückständen der Speiseölgewinnung**

(71) Anmelder: CHEMIE X 2000 SCHRUPSTOCK GMBH & CO. KG, D-42899 Remscheid (DE)
(72) Erfinder: Dötsch, Jürgen, D-56218 Mülheim-Kärlich (DE)
(74) Vertreter: Thiel, Christian

(57) **Zusammenfassung**

Die Erfindung betrifft ein Verfahren zur Aufbereitung von wässrigen Rückständen der Ölgewinnung aus Ölfrüchten, insbesondere der Olivenölgewinnung, bei dem nach mechanischer Zerkleinerung der Ölfrucht, Abtrennung der ölhaltigen flüssigen Phase und Abtrennung des Öls aus der flüssigen Phase, die wässrigen Rückstände der flüssigen Phase mit einem starken Oxidationsmittel zur Oxidation toxischer Bestandteile versetzt werden, sowie eine Mischung zur Behandlung von wässrigen Rückständen der Ölgewinnung.

## Beschreibung

Die Erfindung betrifft ein Verfahren zur Aufbereitung von wässrigen Rückständen der Ölgewinnung aus Ölfrüchten, insbesondere der Gewinnung von Olivenöl, sowie eine Mischung zur Verwendung bei der Behandlung von wässrigen Rückständen der Ölgewinnung.

Die Olive ist eine Steinfrucht, die insbesondere in den Mittelmeerländern eine nicht unerhebliche wirtschaftliche Bedeutung hat. Sowohl die Olive selbst als auch das aus ihr gewonnene Öl spielen in der Ernährung nicht nur der Mittelmeerländer eine wichtige Rolle. Derzeit beträgt die weltweite Olivenproduktion mehr als 17 Mio. Tonnen, davon etwa 7 Mio. Tonnen in Spanien, 3,2 Mio. Tonnen in Italien und 2,4 Mio. Tonnen in Griechenland.

Der Olivenbaum oder echte Ölbaum gehört zur Familie der Ölbaumgewächse. Er gedeiht fast ausschließlich in Regionen mit mediterranem Klima. Die Frucht ist eine Kernfrucht, die durchschnittlich 50 % Wasser und 22 % Öl enthält, Rest Zucker, Zellulose, Proteine und andere Inhaltsstoffe. Das Öl ist sowohl im Fruchtfleisch als auch im Kern enthalten. Der weit überwiegende Teil der Olivenernte geht in die Ölherstellung, die weltweit deutlich über 2 Mio. Tonnen pro Jahr liegt.

Zur Olivenölgewinnung werden die geernteten Früchte zunächst sortiert und gewaschen und danach einer mechanischen Zerkleinerung unterworfen. Diese kann im bloßen "Cuttern" der Früchte in einer Schneidanlage bestehen oder aber im Zermahlen der Früchte in einem Kollergang. Häufig werden beide Zerkleinerungsarten kombiniert, dahingehend, dass die zerschnittenen Früchte einem weiteren Kollergang unterworfen werden.

Der aus der Zerkleinerung hervorgehende wasser- und ölhaltige Brei wird dann weiteren Schritten zur Abtrennung des Öls unterworfen. Das sogenannte Sinolea-Verfahren arbeitet mit rostfreien Stahlklingen, die durch die Olivenpaste vibrieren und damit das Öl zur Oberfläche fließen lassen, wo es abgestreift wird. Diese drucklose Methode liefert qualitativ sehr hochwertiges Öl, ist aber teuer und ausbeuterarm, weshalb das Verfahren eher selten angewandt wird.

Im klassischen Verfahren wird die Paste einer Pressung unterworfen, beispielsweise mit Hilfe von Pressmatten oder mit einer Schnecke, die zunächst zur Aufspaltung des Breies in einen die festen Rückstände enthaltenden Presskuchen und eine Öl und Wasser enthaltende flüssige Phase zur Folge hat. Aus der flüssigen Phase wird das Öl abgetrennt, beispielsweise durch Zentrifugieren, wobei ein wässriger Rückstand mit 90 +/- 2 % Wasser, weniger als 1 % Öl sowie Fest- und Schwebstoffen erhalten wird. Dieser wässrige Rückstand, wird in der Regel in Gruben, einen Wasserlauf oder in die Kanalisation geleitet.

Der wässrige Rückstand aus der Olivenölproduktion, in der Regel als "Fruchtwasser" oder auch "Gatsch" bezeichnet, enthält u.a. Inhaltsstoffe, die bei der Zermahlung der Kerne freigesetzt wurden und vermutlich in größeren Mengen toxische Verbindungen enthalten. Das Fruchtwasser ist daher toxisch und wird biologisch auch über längere Zeit hin kaum zersetzt. Es stellt, da es in großen Mengen in den Ölmühlen anfällt, eine erhebliche Umweltbelastung dar. Gelangt dieses Fruchtwasser in größeren Mengen in eine biologische Kläranlage, kann dies zum Umkippen der Anlage führen. In der Regel ist die Einleitung des Fruchtwassers aus der Olivenölgewinnung in fließende Gewässer oder die Kanalisation unzulässig. Der Gesamtanfall an Fruchtwasser aus der Olivenölgewinnung beträgt allein in den Mittelmeerländern mehrere Millionen Tonnen pro Jahr.

Ähnliche Probleme treten bei der Ölgewinnung aus anderen Ölfrüchten auf, beispielsweise bei Avocadoöl und dem Öl von einigen Kernfrüchten.

Der Erfindung liegt daher die Aufgabe zu Grunde, ein Verfahren bereitzustellen, mit dem die wässrigen Rückstände (das Fruchtwasser) aus der Pflanzenölgewinnung, insbesondere der Olivenölgewinnung, so behandelt werden können, dass sie unbedenklich in fließende Gewässer eingeleitet bzw. einer Kläranlage zugeführt werden können.

Die Erfindung löst dieses Problem. Dazu werden bei einem Verfahren der eingangs genannten Art nach mechanischer Zerkleinerung der Ölfrucht, Abtrennung der ölhaltigen flüssigen Phase und Abtrennung des Öls aus der flüssigen Phase die wässrigen Rückstände der flüssigen Phase mit einem starken Oxidationsmittel zur Oxidation toxischer Bestandteile versetzt.

Es hat sich gezeigt, dass eine relativ geringe Zugabe eines starken Oxidationsmittels zu der toxischen wässrigen Phase nach der Abtrennung des Olivenöls geeignet ist, die toxischen Bestandteile aufzuoxidieren und den Rückstand zu "entgiften". Es wird angenommen, dass das Oxidationsmittel die in den wässrigen Rückständen vorhandenen Giftstoffe zu biologisch unbedenklichen Substanzen aufoxidiert. Die dabei erhaltenen Rückstände sind toxikologisch unbedenklich sowie in vollem Umfang biologisch abbaubar, und das in kurzer Zeit.

Im Grunde genommen kann ein beliebiges starkes Oxidationsmittel genommen werden, beispielsweise Wasserstoffperoxid oder ein Wasserstoffperoxidderivat oder auch Ozon. Aus praktischen Gründen ist es aber zweckmäßig, das Oxidationsmittel in Form eines lagerbeständigen Feststoffes zuzusetzen, beispielsweise in Form eines Persäuresalzes oder einer Mischung von Persäuresalzen. Bevorzugte Salze sind die von Peroxischwefelsäure (Caro'sche Säure), Peroxidischwefelsäure und/oder Peroxikohlensäure, insbesondere die Alkali- und die Ammoniumsalze. Dazu zählen insbesondere Alkaliperoxisulfat, Ammoniumperoxisulfat und Natriumpercarbonat. Bei Natriumpercarbonat handelt es sich um ein Wasserstoffperoxidhydrat des Natriumcarbonats mit einer durchschnittlichen Zusammensetzung von 2Na₂CO₃ x 3H₂O₂.

Naturgemäß kommen aber auch Wasserstoffperoxid und Alkaliperoxide (Na₂O₂) in Frage, wie auch andere kommerziell erhältliche Persäuren und Persalze.

Bevorzugt wird das Oxidationsmittel in einer Menge von 0,2 bis 2,0 Gew.-%, bezogen auf das Gewicht der wässrigen Phase, zugesetzt. In der Regel handelt es sich dabei um ein festes Persalz, das in die wässrige Phase eingerührt wird.

Im Falle einer sauren wässrigen Phase kann es sinnvoll sein, durch Zugabe einer Base, etwa NaOH oder Na₂CO₃, einen neutralen bis leicht basischen pH-Wert einzustellen, im Bereich von 7 bis 8, insbesondere 7,5 bis 8,0.

Zur Beschleunigung und Verbesserung des Oxidationsprozesses ist es sinnvoll, die wässrige Phase zuvor mit einem Demulgator zu versetzen, um eine vorherige Klärung herbeizuführen. Als Demulgatoren oder Emulsionsspalter können handelsübliche Fett- und Sulfonsäuren sowie deren Salze, insbesondere Alkali-, Ammonium- und Erdalkalisalze eingesetzt werden, auch lmidazolinderivate, wie Oleylimidazolinacetat, in der Regel in einer Menge von 0,01 bis 0,5 Gew.-%, bezogen auf die wässrige Phase. Der Demulgator bewirkt eine Aufspaltung der wässrigen Phase in eine sich absetzende Schicht aus Fest- und Schwebstoffen und eine überstehende wässrige Phase, die auch die toxischen Bestandteile enthält. Verbleibende Ölbestandteile werden zumeist von der sich abscheidenden festen Phase aufgenommen.

Die Wirkung des Oxidationsmittels kann durch weitere Zusätze erheblich beschleunigt und intensiviert werden. Solche Zusätze sind beispielsweise übliche Flockungsmittel, etwa Aluminiumsulfat, die beispielsweise in einer Menge von 0,01 bis 0,5 Gew.-%, bezogen auf das Gewicht der flüssigen Phase, zugesetzt werden.

Als Beschleuniger kommen ferner Chelatbildner wie Ethylendiamin und dessen Derivate in Frage. Bevorzugt ist Tetracetylethylendiamin (TAED), sowie EDTA und seine handelsüblichen Salze, ebenfalls in einer Menge von 0,01 bis 0,5 Gew.-%. Es ist sinnvoll, Oxidationsmittel, Flockungsmittel und Beschleuniger zusammen zuzugeben. Diese Zusätze bewirken, dass der wässrigen Phase das Oxidationsmittel voll zugute kommt und nicht durch Schwebstoffe und Metallionen entzogen wird.

In der Regel wird nach Zugabe des Oxidationsmittels zur wässrigen Phase diese über eine gewisse Zeit, etwa 30 min bis 4 h schwach gerührt und anschließend einer Filterpresse zugeführt. Das Filtrat kann in ein Abwassersystem abgegeben werden, der entwässerte Filterkuchen kompostiert werden.

Die Erfindung betrifft ferner eine Mischung aus einem festen Oxidationsmittel, einem Flockungsmittel und einem Beschleuniger zur Behandlung von wässrigen Rückständen der Ölgewinnung, insbesondere in Form einer Fertigpackung. Eine solche Fertigpackung ist so konfektioniert, dass sie beispielsweise auf einem Sammelkessel von 1000, 2000 oder 5000 | Inhalt berechnet ist. Die Mischung enthält beispielsweise 80 bis 95 Gew.-% Persalze, 2,5 bis 10 Gew.-% Flockungsmittel und 2,5 bis 10 Gew.-% Beschleuniger, insbesondere Natrium- oder Ammoniumpersulfat, Aluminiumsulfat und TAED. Der Demulgator kann als separate Komponente beigefügt sein. Ein solches Gebinde enthält beispielsweise 12 kg der Mischung und 250 g Demulgator für einen 1000 l Ansatz.

Die Erfindung wird durch das nachfolgende Beispiel näher erläutert.

### Beispiel

1000 l Fruchtwasser aus der Olivenölgewinnung werden nach Abzentrifugieren des Öls in einem Rührkessel gesammelt, mit 250 g des Natriumsalzes einer gesättigten Fettsäure versetzt und etwa eine halbe Stunde ruhen gelassen. Anschließend werden 1 kg Aluminiumsulfat und 0,5 kg TAED eingerührt sowie 12 kg Natriumpersulfat. Nach der Homogenisierung wird die Mischung zwei Stunden schwach gerührt. Eine leichte Schaumbildung zeigt die einsetzende chemische Reaktion an. Nach Abklingen der Reaktion nach etwa zwei Stunden kann das behandelte Fruchtwasser in einer Filterpresse von den Feststoffen befreit und dann problemlos in die Kanalisation abgegeben werden. Der entwässerte Filterkuchen kann beispielsweise kompostiert werden.

## Patentansprüche

1. Verfahren zur Aufbereitung von wässrigen Rückständen der ölgewinnung aus Ölfrüchten, insbesondere der Olivenölgewinnung, bei dem nach mechanischer Zerkleinerung der Ölfrucht, Abtrennung der ölhaltigen flüssigen Phase und Abtrennung des Öls aus der flüssigen Phase, die wässrigen Rückstände der flüssigen Phase mit einem starken Oxidationsmittel zur Oxidation toxischer Bestandteile versetzt werden.

2. Verfahren nach Anspruch 1, **dadurch gekennzeichnet, dass** das Oxidationsmittel Wasserstoffperoxid oder ein Wasserstoffperoxidderivat ist.

3. Verfahren nach Anspruch 1 oder 2, **dadurch gekennzeichnet, dass** das Oxidationsmittel ein Persäuresalz oder eine Mischung aus Persäuresalzen ist.

4. Verfahren nach Anspruch 3, **dadurch gekennzeichnet, dass** das Oxidationsmittel ein Salz der Peroxischwefelsäure, der Peroxidischwefelsäure und/oder der Peroxikohlensäure ist.

5. Verfahren nach Anspruch 4, **dadurch gekennzeichnet, dass** das Salz ein Alkali- oder ein Ammoniumsalz ist.

6. Verfahren nach Anspruch 5, **dadurch gekennzeichnet, dass** das Salz ein Alkaliperoxisulfat, ein Ammoniumperoxisulfat und/oder Natriumpercarbonat ist.

7. Verfahren nach einem der vorstehenden Ansprüche, **dadurch gekennzeichnet, dass** die wässrige Phase mit 0,2 bis 2,0 Gew.-% Oxidationsmittel, bezogen auf das Gewicht der wässrigen Phase, versetzt wird.

8. Verfahren nach einem der vorstehenden Ansprüche, **dadurch gekennzeichnet, dass** die wässrige Phase mit einem Demulgator versetzt wird.

9. Verfahren nach Anspruch 8, **dadurch gekennzeichnet, dass** die wässrige Phase mit 0,01 bis 0,5 Gew.-%, bezogen auf das Gewicht der wässrigen Phase, Demulgator versetzt wird.

10. Verfahren nach Anspruch 8 oder 9, **dadurch gekennzeichnet, dass** die wässrige Phase vor Zusatz des Oxidationsmittels mit dem Demulgator versetzt und anschließend ruhen gelassen wird.

11. Verfahren nach einem der vorstehenden Ansprüche, **dadurch gekennzeichnet, dass** die wässrige Phase zusätzlich mit einem Flockungsmittel versetzt wird.

12. Verfahren nach Anspruch 11, **dadurch gekennzeichnet, dass** die wässrige Phase mit 0,01 bis 0,5 Gew.-%, bezogen auf das Gewicht der wässrigen Phase, Flockungsmittel versetzt wird.

13. Verfahren nach einem der vorstehenden Ansprüche, **dadurch gekennzeichnet, dass** die wässrige Phase mit einem Beschleuniger versetzt wird.

14. Verfahren nach Anspruch 13, **dadurch gekennzeichnet, dass** die wässrige Phase mit 0,01 bis 0,5 Gew.-%, bezogen auf das Gewicht der wässrigen Phase, Beschleuniger versetzt wird.

15. Verfahren nach einem der vorstehenden Ansprüche, **dadurch gekennzeichnet, dass** die wässrige Phase zunächst mit einem Demulgator versetzt wird, danach zur Klärung stehengelassen wird, anschließend mit einer Mischung aus Persalz, Flockungsmittel und Beschleuniger versetzt, homogenisiert und erneut ruhen gelassen wird.

16. Mischung aus einem Peroxisalz, einem Flockungsmittel und einem Beschleuniger zur Behandlung von wässrigen Rückständen der Ölgewinnung.

17. Mischung nach Anspruch 16, **dadurch gekennzeichnet, dass** sie 80 bis 95 Gew.-% Persalz, 2,5 bis 10 Gew.-% Flockungsmittel und 2,5 bis 10 Gew.-% Beschleuniger in Pulverform enthält.
